# EUROPEAN PATENT APPLICATION

(11) **EP 2 837 744 A1**
(43) Date of publication of application: **18.02.2015**
(21) Application number: 13866481.8
(22) Date of filing: 11.11.2013
(51) Int. Cl.: E02F 9/12, E02F 9/20

(54) **EXCAVATOR PIVOT APPARATUS PROVIDED WITH PIVOT THRUST PREVENTION DEVICE**

(30) Priority: 06.05.2013 KR 20130050626
(71) Applicant: Hyundai Heavy Industries Co., Ltd., Ulsan 682-792 (KR)
(72) Inventor: SHIN, Kyung Chul, Ulsan 682-814 (KR)
(74) Representative: Ferreccio, Rinaldo
(86) International application number: PCT/KR2013/010169
(87) International publication number: WO 2014/181940

(57) **Abstract**

Provided is a swing device of an excavator having an anti-sliding device, which includes a brake channel connected to a hydraulic chamber of a brake piston, a select valve for connecting the brake channel to a brake hydraulic port or a delay channel, a spring compartment channel having one side connected to a spring compartment of the brake piston and the other side connected to one point of the delay channel, a check valve provided at the spring compartment channel to allow a hydraulic pressure to be supplied only in a direction from the delay channel toward the spring compartment, a spring compartment bypass channel for connecting one point of the spring compartment channel between the spring compartment and the check valve and one point of the spring compartment channel between the check valve and the delay channel, an anti-sliding valve provided at the spring compartment bypass channel to block or open the spring compartment bypass channel, a slope detection sensor provided at one side of the excavator to sense a slope, and an anti-sliding valve controller for blocking the anti-sliding valve when the excavator located on a slope and opening the anti-sliding valve when the excavator is located at a place other than a slope, based on slope information of the slope detection sensor.

## Description

### [Technical Field]

The present disclosure relates to a swing device of an excavator having an anti-sliding device, and more particularly, to a swing device of an excavator having an anti-sliding device which, when a brake releasing signal is applied in a state where an excavator is located on a slope, prevents a hydraulic pressure at a spring of a brake piston to discharge so that a moving speed of the brake piston is lowered and thus the braking is smoothly released, thereby preventing the braking from being instantly released.

### [Background Art]

An excavator basically includes a lower frame to which a driving device is mounted and an upper frame to which a working device is mounted. In addition, the lower frame and the upper frame are connected to a swing device which may rotate a full 360 degrees, and the upper frame is also rotatable due to the rotation of the swing device (Korean Utility Model Registration No. 20-0168768).

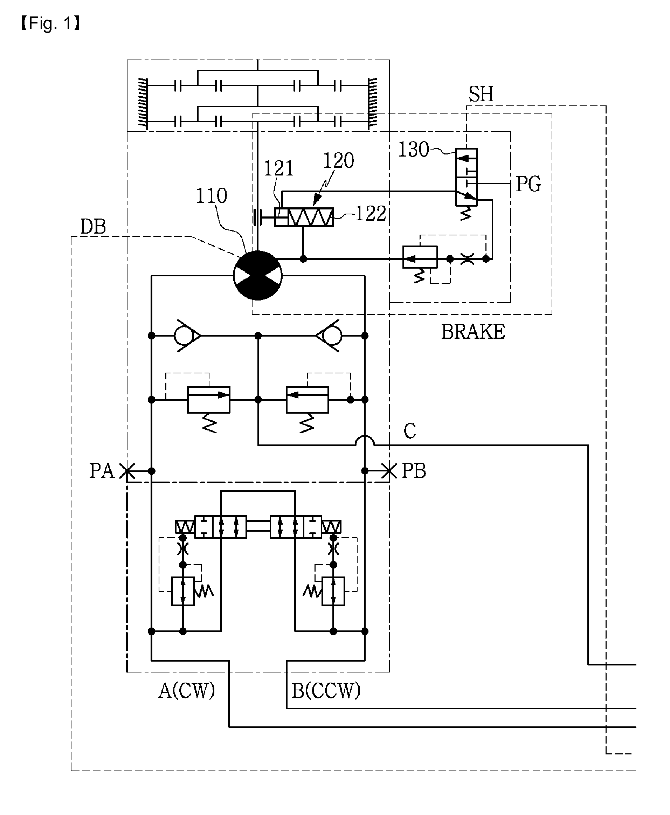

The swing device has a swing motor and operates or stops turning according to the operation of the swing motor. A circuit configuration of an existing swing device of an excavator is shown in Fig. 1. Referring to Fig. 1, the existing swing device includes a swing motor for driving a reducer, a brake piston and a friction plate for braking the swing motor, a select valve and a brake hydraulic port for selectively supplying a hydraulic pressure to the brake piston, or the like.

The braking operation and brake-releasing operation of the existing swing device are as follows. If a brake releasing signal is applied, a brake hydraulic port (PG) is opened by the select valve to apply a hydraulic pressure to the brake piston, and the hydraulic pressure pushes a spring to release the brake. On the contrary, if a braking signal (SH) is applied, the brake hydraulic port is blocked, and the hydraulic pressure applied to the brake piston is discharged. Accordingly, the piston moves to the left by the spring so that the swing motor is braked by the friction plate.

The existing swing device configured as above instantly releases the brake by a hydraulic pressure supplied to the brake piston. Accordingly, if the brake is released in a state where an excavator is on a slope, the upper portion of the excavator may be pushed by the weight of the upper frame or any other weight, which increase the danger of an accident.

### [Disclosure]

### [Technical Problem]

The present disclosure is directed to providing a swing device of an excavator having an anti-sliding device which, when a brake releasing signal is applied in a state where an excavator is located on a slope, prevents a hydraulic pressure at a spring of a brake piston to discharge so that a moving speed of the brake piston is lowered and thus the braking is smoothly released, thereby preventing the braking from being instantly released.

### [Technical Solution]

In one general aspect, the present disclosure provides a swing device of an excavator having an anti-sliding device, which includes: a brake channel connected to a hydraulic chamber of a brake piston; a select valve for connecting the brake channel to a brake hydraulic port or a delay channel; a spring compartment channel having one side connected to a spring compartment of the brake piston and the other side connected to one point of the delay channel; a check valve provided at the spring compartment channel to allow a hydraulic pressure to be supplied only in a direction from the delay channel toward the spring compartment; a spring compartment bypass channel for connecting one point of the spring compartment channel between the spring compartment and the check valve and one point of the spring compartment channel between the check valve and the delay channel; an anti-sliding valve provided at the spring compartment bypass channel to block or open the spring compartment bypass channel; a slope detection sensor provided at one side of the excavator to sense a slope; and an anti-sliding valve controller for blocking the anti-sliding valve when the excavator located on a slope and opening the anti-sliding valve when the excavator is located at a place other than a slope, based on slope information of the slope detection sensor.

When the brake is released in a state where the excavator is located on a slope, the brake channel may be connected to the delay channel so that a hydraulic pressure of the hydraulic chamber of the brake piston is discharged to the delay channel, the spring compartment bypass channel may be blocked to prevent a hydraulic pressure from being discharged at the spring compartment, and a travel time of the brake piston in a brake releasing direction may be delayed.

In another general aspect, the present disclosure provides a swing device of an excavator having an anti-sliding device, which includes: a brake channel connected to a hydraulic chamber of a brake piston; a select valve for connecting the brake channel to a brake hydraulic port or a delay channel; a spring compartment channel having one side connected to a spring compartment of the brake piston and the other side connected to one point of the delay channel; a check valve provided at the spring compartment channel to allow a hydraulic pressure to be supplied only in a direction from the delay channel toward the spring compartment; a spring compartment bypass channel for connecting one point of the spring compartment channel between the spring compartment and the check valve and one point of the spring compartment channel between the check valve and the delay channel; and an orifice provided on the spring compartment bypass channel to lower a discharge speed of the hydraulic pressure supplied from the spring compartment to the delay channel when the brake is released.

When the brake of the excavator is released, the brake channel may be blocked from the delay channel so that a pressure is supplied to the hydraulic chamber and the brake piston is to move in a direction of releasing the brake, and the discharge speed of the hydraulic pressure at the spring compartment may be lowered by the orifice so that a travel time of the brake piston in a brake releasing direction is delayed.

### [Advantageous Effects]

When the brake is released in a state where an excavator is located on a slope, a discharge speed of a hydraulic pressure received from a spring compartment of a brake piston is delayed to prevent the brake from being instantly released, and thus it is possible to prevent the excavator from being pushed by the weight of an upper frame of the excavator.

### [Description of Drawings]

Fig. 1 is a circuit diagram showing an existing swing device of an excavator.
Fig. 2 is a circuit diagram showing a swing device of an excavator having an anti-sliding device according to an embodiment of the present disclosure.
Fig. 3 is a reference view showing a brake releasing operation when an excavator is located on a slope.

### [Best Mode]

This specification proposes a technique for preventing an excavator from being pushed by its weight or any other weights due to instant brake release, by restraining or delaying the discharge of a hydraulic pressure at a spring compartment of a brake piston so that the brake is smoothly released, when the brake is released in a state where the excavator is located on a slope.

Hereinafter, a swing device of an excavator having an anti-sliding device according to an embodiment of the present disclosure will be described.

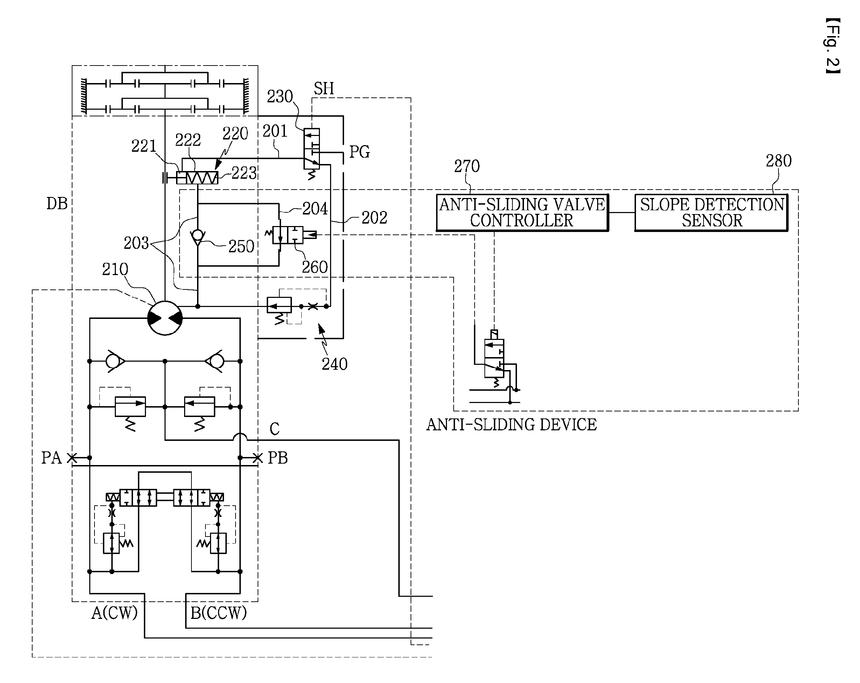

Referring to Fig. 2, the swing device of an excavator having an anti-sliding device according to an embodiment of the present disclosure includes a swing motor 210 for driving a reducer, a brake piston 220 and a friction plate for selectively braking the swing motor 210, a brake hydraulic port (PG) for supplying a hydraulic pressure to a hydraulic chamber 221 of the brake piston 220, and a select valve 230 for selectively connecting the brake hydraulic chamber 221 to the brake hydraulic port.

In this configuration, the swing motor 210 performs a braking process and a brake releasing process at a place other than a slope according to the following procedure. In case of braking, the connection between the hydraulic chamber 221 of the brake piston 220 and the brake hydraulic port is blocked, so that a hydraulic pressure in the hydraulic chamber 221 of the brake piston 220 is discharged and also a hydraulic pressure is supplied to the spring compartment 222 of the brake piston 220. Accordingly, the friction plate is moved to the left by a spring force of the brake piston 220, thereby braking the swing motor 210. In case of brake releasing, the hydraulic chamber 221 of the brake piston 220 is connected to the brake hydraulic port by the select valve 230. Accordingly, a hydraulic pressure is supplied to the hydraulic chamber 221 of the brake piston 220 and also a hydraulic pressure in the spring compartment 222 is discharged. In addition, the hydraulic pressure supplied to the hydraulic chamber 221 moves the brake piston 220 and the friction plate to the right, thereby releasing the brake.

For reference, in the following description, a channel between the hydraulic chamber 221 of the brake piston 220 and the select valve 230 is called a brake channel, and a channel between the select valve 230 and the swing motor 210 is called a delay channel, for convenience. The brake channel is connected to the brake hydraulic port or the delay channel by the select valve 230. In addition, a time delay valve 240 is provided at the delay channel to prevent a hydraulic pressure from being abruptly discharged from the hydraulic chamber 221 of the brake piston 220 during a braking process.

As described above, when the brake is released, since a hydraulic pressure in the spring compartment 222 of the brake piston 220 is discharged, if a hydraulic pressure is applied to the hydraulic chamber 221 of the brake piston 220, the spring 223 is easily pushed to the right, thereby generating an instant brake releasing operation.

In this embodiment, the discharge of the hydraulic pressure in the spring compartment 222 of the brake piston 220 is prevented or delayed, and thus even though the hydraulic pressure is applied to the hydraulic chamber 221 of the brake piston 220, the speed of the spring 223 pushed to the right by the hydraulic pressure in the spring compartment 222 is lowered so that the brake releasing speed is delayed. In other words, a hydraulic pressure remains in the spring compartment 222 so that the speed of the spring 223 pushed to the right is delayed by the hydraulic pressure of the hydraulic chamber 221. For this, the swing device of an excavator according to this embodiment further includes an anti-sliding device.

The anti-sliding device includes an anti-sliding valve 260, an anti-sliding valve controller 270 and a slope detection sensor 280. The anti-sliding valve 260 selectively opens or blocks the spring compartment bypass channel 204. In this embodiment, a check valve 250 is provided at a channel which connects the spring compartment 222 of the brake piston 220 to the delay channel, namely the spring compartment channel 203. The check valve 250 allows a hydraulic pressure to be supplied only in a direction from the delay channel toward the spring compartment 222 of the brake piston 220 and prevents a hydraulic pressure from being supplied in an opposite direction. The spring compartment bypass channel 204 is a channel which connects one point of the spring compartment channel 203 at an upper portion of the check valve 250 and one point of the spring compartment channel 203 at a lower portion of the check valve 250. The hydraulic pressure is supplied to the spring compartment 222 of the brake piston 220 through the spring compartment channel 203, and the hydraulic pressure is discharged at the spring compartment 222 through the spring compartment bypass channel 204.

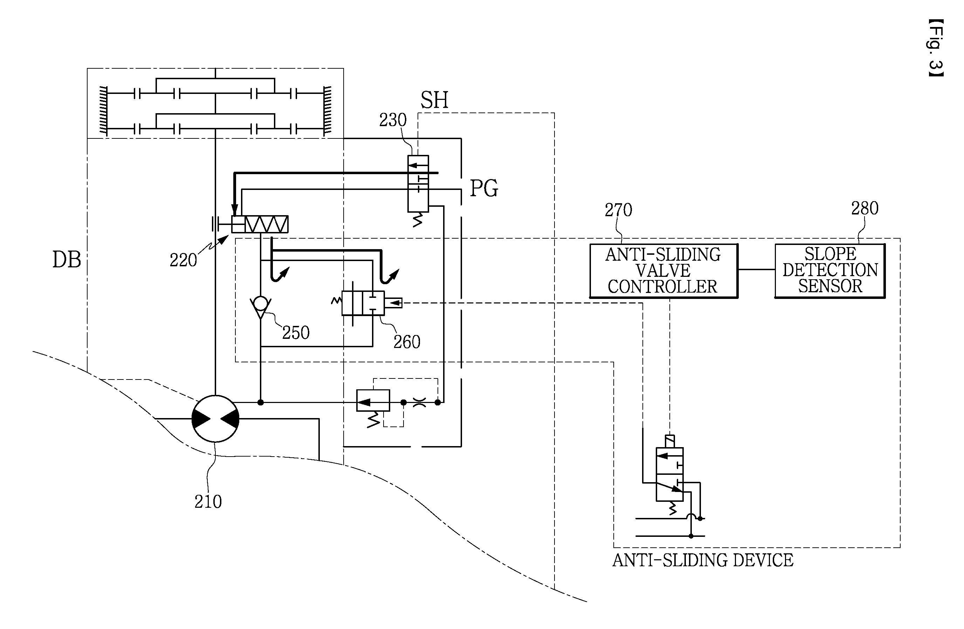

In case of brake releasing in a state where the excavator is located at a place other than a slope, the anti-sliding valve 260 is in an opened state, and the hydraulic pressure of the spring compartment 222 is discharged through the spring compartment bypass channel 204. Meanwhile, in case of brake releasing in a state where the excavator is located on a slope, the anti-sliding valve 260 is blocked, and accordingly the spring compartment bypass channel 204 is also blocked, namely in a kind of a closed loop state. By doing so, the discharge of hydraulic pressure from the spring compartment 222 is prevented (see Fig. 3). Since the discharge of hydraulic pressure from the spring compartment 222 is restrained during brake releasing as described above, even though a hydraulic pressure is supplied to the hydraulic chamber 221 of the brake piston 220, a travel time of the brake piston 220 and the friction plate to the right is delayed since the hydraulic pressure in the spring compartment 222 and the force of the spring 223 should be overcome. Since the travel time of the brake piston 220 and the friction plate is delayed, the brake releasing speed may be lowered, and thus it is possible to prevent the excavator from being pushed.

The anti-sliding valve controller 270 blocks or opens the anti-sliding valve 260 based on slope information sent from the slope detection sensor 280. In case of a slope, the anti-sliding valve 260 is blocked by the anti-sliding valve controller 270, but in case of a place other than a slope, the anti-sliding valve 260 is opened. The slope detection sensor 280 is provided at one side of the excavator to sense a slope over a certain angle and may employ, for example, a gyro sensor.

Meanwhile, in this embodiment, the anti-sliding device has been illustrated as including the anti-sliding valve 260, the anti-sliding valve controller 270 and the slope detection sensor 280, but the anti-sliding device may also be configured by combining the spring compartment bypass channel 204 with an orifice. In this case, the spring compartment bypass channel 204 is a channel which connects the spring compartment 222 of the brake piston 220 to the delay channel as described above, and the orifice is provided on the spring compartment bypass channel 204 to lower a discharge speed of the hydraulic pressure discharged from the spring compartment 222 to the delay channel when the brake is released.

## Claims

1. A swing device of an excavator having an anti-sliding device, comprising:
a brake channel connected to a hydraulic chamber of a brake piston;
a select valve for connecting the brake channel to a brake hydraulic port or a delay channel;
a spring compartment channel having one side connected to a spring compartment of the brake piston and the other side connected to one point of the delay channel;
a check valve provided at the spring compartment channel to allow a hydraulic pressure to be supplied only in a direction from the delay channel toward the spring compartment;
a spring compartment bypass channel for connecting one point of the spring compartment channel between the spring compartment and the check valve and one point of the spring compartment channel between the check valve and the delay channel;
an anti-sliding valve provided at the spring compartment bypass channel to block or open the spring compartment bypass channel;
a slope detection sensor provided at one side of the excavator to sense a slope; and
an anti-sliding valve controller for blocking the anti-sliding valve when the excavator located on a slope and opening the anti-sliding valve when the excavator is located at a place other than a slope, based on slope information of the slope detection sensor.

2. The swing device of an excavator having an anti-sliding device according to claim 1,
wherein when the brake is released in a state where the excavator is located on a slope,
the brake channel is connected to the delay channel so that a hydraulic pressure of the hydraulic chamber of the brake piston is discharged to the delay channel,
the spring compartment bypass channel is blocked to prevent a hydraulic pressure from being discharged at the spring compartment, and a travel time of the brake piston in a brake releasing direction is delayed.

3. A swing device of an excavator having an anti-sliding device, comprising:
a brake channel connected to a hydraulic chamber of a brake piston;
a select valve for connecting the brake channel to a brake hydraulic port or a delay channel;
a spring compartment channel having one side connected to a spring compartment of the brake piston and the other side connected to one point of the delay channel;
a check valve provided at the spring compartment channel to allow a hydraulic pressure to be supplied only in a direction from the delay channel toward the spring compartment;
a spring compartment bypass channel for connecting one point of the spring compartment channel between the spring compartment and the check valve and one point of the spring compartment channel between the check valve and the delay channel; and
an orifice provided on the spring compartment bypass channel to lower a discharge speed of the hydraulic pressure supplied from the spring compartment to the delay channel when the brake is released.

4. The swing device of an excavator having an anti-sliding device according to claim 3,
wherein when the brake of the excavator is released,
the brake channel is blocked from the delay channel so that a pressure is supplied to the hydraulic chamber and the brake piston is to move in a direction of releasing the brake, and the discharge speed of the hydraulic pressure at the spring compartment is lowered by the orifice so that a travel time of the brake piston in a brake releasing direction is delayed.
